Europäisches Patentamt

(19) European Patent Office

Office européen des brevets

(11) Publication number: **0 243 466**
**B1**

(12) **EUROPEAN PATENT SPECIFICATION**

(45) Date of publication of patent specification: **01.08.90**

(21) Application number: **86906640.7**

(22) Date of filing: **16.10.86**

(86) International application number:
**PCT/US86/02201**

(87) International publication number:
**WO 87/02498 23.04.87 Gazette 87/09**

(51) Int. Cl.⁵: **G 11 B 5/55**

(54) **APPARATUS AND METHOD FOR DAMPING HEAD POSITIONERS FOR DISK DRIVES.**

(30) Priority: **16.10.85 US 788282**

(43) Date of publication of application:
**04.11.87 Bulletin 87/45**

(45) Publication of the grant of the patent:
**01.08.90 Bulletin 90/31**

(84) Designated Contracting States:
**DE FR GB IT NL**

(56) References cited:
**EP-A-0 246 375**
**US-A-3 961 371**
**US-A-4 144 466**
**US-A-4 200 894**
**US-A-4 408 238**

**PATENT ABSTRACTS OF JAPAN, vol. 8, no. 55
(P-260)1492r, 13th March 1984; & JP-A-58 203
674**

(73) Proprietor: **Hewlett-Packard Company
3000 Hanover Street
Palo Alto California 94304 (US)**

(72) Inventor: **SLEGER, Roger, R.
2925 San Ramon Drive
Meridian, ID 83642 (US)**

(74) Representative: **Patentanwälte Kohler -
Schwindling - Späth
Hohentwielstrasse 41
D-7000 Stuttgart 1 (DE)**

Courier Press, Leamington Spa, England.

**Description**

This invention relates generally to the control of magnetic head movement in high performance magnetic disk drives. More particularly, the invention is directed to the stabilization and control of mechanical resonances which occur in head positioners for such drives.

A disk drive is a rotating magnetic storage device capable of storing data which may be accessed at high speeds. This device includes a rotating, flat magnetic surface onto which data can be recorded and later retrieved, usually in milliseconds because of the high rotational rate of the disk and the fast radial accessing capability of the head positioner. The heat positioner of the disk drive assembly functions to locate and maintain the magnetic read/write heads at a commanded track position above the disk, and this head positioner also provides precision support and stability which is necessary for the heads to function properly. Most disk drive designs are based upon the moving head principle as opposed to the faster, but more costly, "head per track" concept. Usually more than one disk or disk surface is used per drive, and in this case one or two separate heads are used for accessing each disc surface. The heads for each surface are mounted on aligned arms of the positioner such that they all move in unison. The resulting head positioner structure looks like a comb and is often referred to the "head comb". The head comb is typically aligned and moved by a support and motor structure which is operative with either linear or rotary motion.

When a head positioner in a disk drive performs a very fast seek, many resonant or ringing modes of vibration can be excited and unless properly damped, will tend to ring for long periods of time, typically on the order of 100 miliseconds or more. Often the amplitude of these modes of vibration at the magnetic head position is a large percentage of the width of a data track on the magnetic disk. If this is the case, data reading or writing will be disabled until the ringing amplitude drops to a value sufficiently low to permit accurate reading or writing.

Disk drives having a high track density typically employ positioning servo schemes in order to ensure accurate and fast track locating by the magnetic heads. However, the accuracy and speed of such servo systems are highly dependant upon the mechanical system resonances. A servo system is a negative feedback control system in which part of the system is mechanical. An ideal control loop for such a servo system feeds the output signal of the system back to the input of the system and out of phase with the input thereto to force the system to exhibit a unity gain transfer function. When the servo system mechanics are introduced, mechanical resonances produce output signals greater than the input signals as well as cause shifted output signal phase relationships relative to the input signal. Some compensation is customarily introduced into the servo control loop to provide improved stability with the mechanical system. But in spite of this compensation, mechanical resonances of the above type produced by head positioner vibrational resonances often are large enough and provide a phase shift of sufficient magnitude to create a positive feedback for the system at greater than unity gain. When this happens, the servo loop becomes unstable at that resonance frequency.

In the low performance disc drive industry, one practice has been to employ rotational dampers on stepper motors which are used to drive head positioners for the disc drives. These dampers are used to increase the stability of the stepper motor per se. An example of such dampers is disclosed in US—A—4 200 894. This document discloses a head positioning apparatus having the features of the preamble of claim 1. However, as presently known, these damping techniques of the prior art are not directed to the damping of vibrational resonances of an entire head positioner used in high performance track following servo disc drive actuators, as in the case with the present invention.

The general purpose of this invention is to provide a new and improved solution to the above problems resulting from vibrational resonances in head positioners for disk drives. This general purpose is reached by the features of the characterising part of claim 1. This solution involves reducing the amplitude of resonance modes of vibration in the head positioner by providing a chosen movable floating mass at a selected location on the head positioner, and this location exhibits large motions of the vibrating resonant modes in the head positioner. This mass is positioned in a liquid film of known viscosity, and the mass and film are located within a housing securely fixed to the head positioner at the selected location thereon. As the head positioner traverses its seeking path and abruptly comes toward a rest position, vibrational mode energy is coupled from the head positioner to the mass to thus cause the mass to move across the liquid film, thereby creating shear forces at the mass-film interface. These shear forces and the distance over which they act represent damper or energy loss that is removed from the vibration mode energy of the head positioner.

In a preferred embodiment of invention, the mass is centered via a soft-spring between opposite end walls of the housing, and vibrational energy received by the housing is viscously coupled to the mass at frequencies close or equal to the vibrational resonant frequencies of the head positioner. The spring only serves to keep the mass away from the end walls of the mass-housing, so that the damper mass remains functional regardless of its orientation relative to gravity.

It is an advantage of the damper apparatus according to the present invention that it is easy to construct and particularly and uniquely adapted and well-suited for mounting on a head positioner for a disk drive.

Another advantage of the damping method and apparatus is that it allows faster disk drive track locating times and wider bandwidth and higher performance of servo positioning systems associated therewith, and that it dissipates energy from modes of head positioner vibration to thereby reduce settling time after a seek movement. Thus subsequent earlier reading and writing operations are achieved.

A further advantage is that the method and apparatus improves associated servo control loop stability and is operative to improve servo and seek performance without the need to increase resonant frequencies which, in some cases, may not be possible.

The invention will become more readily apparent in the following description of the accompanying drawing.

Brief description of drawings

Figure 1 is a isometric view of a head positioner and damping apparatus according to the invention.

Figure 2 is a cross-section view of the damping apparatus of Figure 1.

Figure 3 is a graph plotting resonant mode amplitude versus resonant frequency for the damped (D) and undamped (U) head positioner to illustrate the reduction in resonant mode amplitude produced by the present invention.

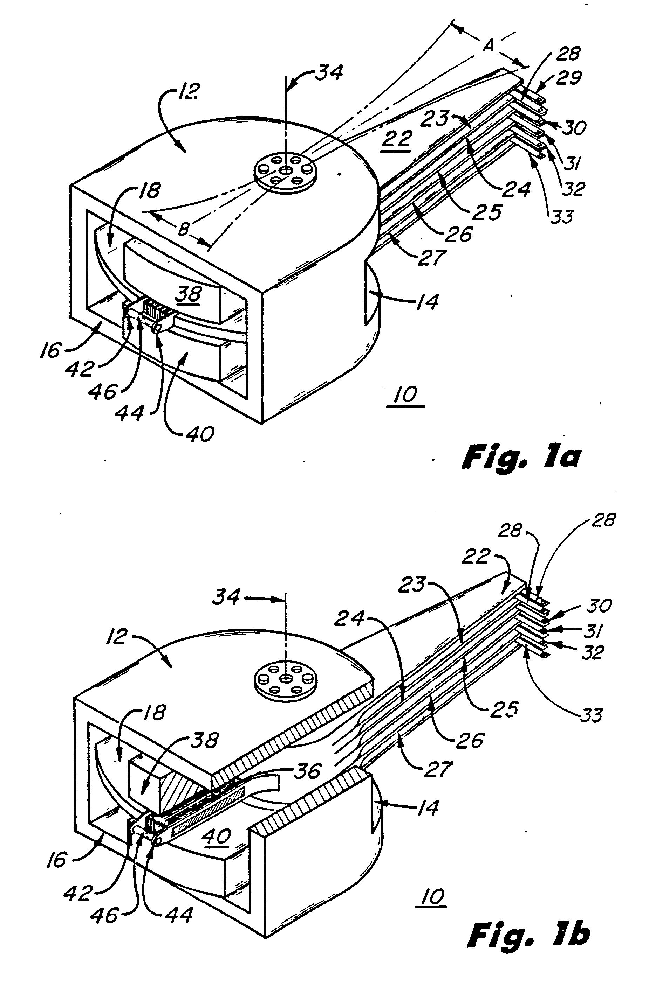

Referring now to Figure 1, there is shown a rotary head positioner including a motor and arm support structure 12 with front and back openings 14 and 16 respectively. The support structure 12 serves as a housing for a magnetic head accessing arm structure 18 which includes a plurality of accessing head arms 22, 23, 24, 25, 26 and 27 extending as shown out of the front opening 14 and having a plurality of magnetic heads 28, 29, 30, 31, 32 and 33 located on the ends of the accessing arms. The accessing head arm structure 18 is pivotally mounted within the support structure 12 on a vertical axis 34 about which it is driven with rotary motion at high speeds during a fast seek operation. Magnetic discs (not shown) are positioned in the openings between the magnetic heads 28, 29, 30, 31, 32 and 33, and these heads are driven to preselected positions on certain tracks of these disks during a fast seek operation.

The accessing head arm structure 18 is driven by a motor coil 36 which is mounted inside the housing 12 and on the head arm structure 18. This motor coil 36 is positioned as shown at the rear center of the accessing head arm structure 18. The motor coil 36 is also centered between upper and lower motor magnets 38 and 40, and includes a pair of end flanges 42 and 44 between which the motor coil is wound. A floating mass damper 46 is mounted as shown between these flanges 42 and 44.

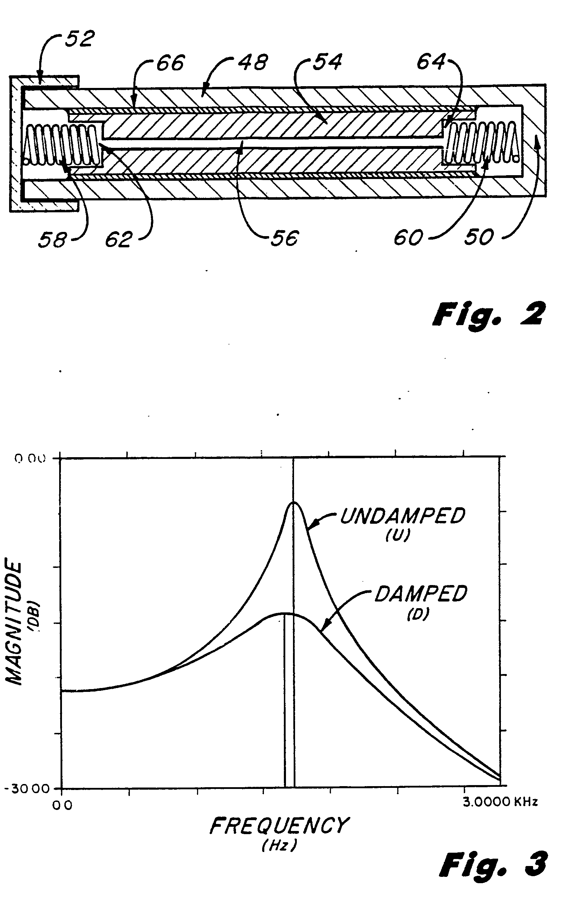

Referring now to Figure 2, the floating mass damper 46 is shown in more detail in a cross section view thereof and includes a cylindrical housing 48, typically of magnesium, having an end wall 50 and another removable wall or cap 52 which permits the loading therein of a floating damper mass 54. The floating damper mass 54 is typically non-magnetic stainless steel and has a central passage 56 along the longitudinal center line thereof and is centered in the housing 48 with a pair of soft centering springs 58 and 60. These springs extend between the opposite end walls 50 and 52 of the housing 48 and recessed or cavity regions 62 and 64 in the respective ends of the floating damper mass 54.

A viscous damping film 66 is provided as shown between the outer surface of the floating damper mass 54 and the interior surface of the housing 48, and this viscous damping film 66 will typically consist of silicone oil.

During a fast seek operation, the ends of the accessing head arms 22, 24 and 26 will typically undergo a resonant mode vibrational amplitude (greatly exaggerated) as indicated by the distance A in Figure 1. When undergoing such a resonant mode vibration, the rotary head positioner 10 cannot become electrically useable until the value of A is reduced to near zero as the head arm vibration ceases. In accordance with the present invention, the floating mass damper 46 provides an elegantly simple solution to reducing the time required for the value of A to be reduced. In accordance with this invention, the floating mass damper 46 is mounted at the rear of the accessing head arm structure 18 and in a vertical plane with the dimension B. This dimension B corresponds to the maximum resonant mode vibration which the rear of the accessing head arm structure 18 will undergo during a fast seek operation and corresponding to the displacement A of the accessing head arms 22, 24 and 26. During the resonant mode vibration which produces the displacement B as indicated, the housing 48 is rapidly driven laterally back and forth across the viscous damping film 66. This movement of the housing 48 in cooperation with less movement of the floating damper mass 54 produces lateral shear forces which serve to substantially dissipate vibrational mode energy in the rotating accessing head arm structure 18. This energy dissipation thus quickly reduces the value of dimension B and maintains the value of B at a level much lower than it would otherwise have been in the absence of the floating mass damper 46.

Referring now to Figure 3, there is shown a graph of the vibrational magnitude of the accessing head arm structure 18 as a function of vibration frequency. Line U of the curve in Figure 3 represents the vibrational magnitude M without damping, whereas line D indicates the variation of M with frequency after damping. As shown in Figure 3, the maximum point on line D curve will be slightly shifted (lowered) in frequency by a certain amount as a result of the damping action. Thus, this reduction in the magnification factor M as a result of employing the floating mass damper 46 substantially reduces the magnitude of the resonance values at A and B in Figure 1 to more stably locate the magnetic heads 28, 30 and 32 on preselected tracks of the magnetic disks previously described.

Thus, there has been described a new and improved method and apparatus which is easy to construct and which is reliable and durable in operation and adds a relatively small increase in cost to the rotary head positioner 10. In contrast to the vastly more complex viscous damping systems of the prior art, the floating mass damper 46 of the present invention employs only a single floating damper mass 54 which is spring centered using only a pair of springs 58 and 60 and generates substantial shear forces as the housing 48 moves over the viscous damping film 66. It has been determined that the reduction in settling time of the damped head positioner has been 5 to 10 times that of the undamped head positioner.

Various modifications may be made in the above described embodiment of the invention without departing from the scope of the appended claims. For example, for reasons of ease of assembly, it is often preferable to use a 3-piece construction for the accessing head arm structure 18. Thus, one piece may consist of the arms 22, 23, 24, 25, 26 and 27 integrally joined at one end; a second or center interlocking piece may be rotatably mounted at the axis 34 and mechanically interlocked with the accessing arms 22, 23, 24, 25, 26 and 27; and an end or motor coil support piece 41 may be mounted at the rear of center interlocking piece to facilitate bringing the motor coil 36 within the housing 12 and between the upper and lower motor magnets 38 and 40, respectively.

## Claims

1. Head positioning apparatus for a magnetic disc drive comprising at least one magnetic head accessing arm structure (18) including at least one head arm (22 to 27), which arm structure (18) is rotatably mounted on a chosen axis (34), drive means (36, 38, 40) coupled to said arm structure (18), and a floating mass damper (46) coupled to said arm structure (18) and including a housing (48) having interior walls receiving a film of a viscous liquid (66) and a mass (54) located on said film (66), with said film (66) located between said interior walls and said mass (54) for enabling reciprocating movement of said mass with respect to said housing (48) on said film, characterized in that said mass (54) moves linearly regardless of the orientation of said head positioner apparatus with respect to gravity and in that said damper housing (48) is mounted directly on said arm structure (18) a predetermined distance from said chosen axis (34) and at a location for receiving a significant vibrational resonance amplitude from said arm structure (18) in the direction of said reciprocating motion of said mass (54).

2. The head positioner of claim 1 wherein a plurality of head arms (22 to 27) extends from a central portion of said arm structure (18) and a motor coil (36) is mounted on said central portion opposite to said plurality of head arms (22 to 27), said floating mass damper (46) being connected to the outer end of said motor coil (36).

3. The head positioner of claim 2 wherein the motor coil (36) includes two end flanges (42, 44) extending substantially radially from said central portion, said floating mass damper (46) being mounted between said end flanges (42, 44).

4. The head positioner of any one of claims 1 to 3 wherein said floating mass damper (46) comprises a cylindrical housing (48) having end walls (50, 52), a cylindrical floating damper mass (54) coaxially mounted within said housing (48) and having a central passage (56), and a pair of soft centering springs (58, 60) extending between the opposite end walls (50, 52) of said housing (48) and the respective ends of said damper mass (54), said film (66) being located between the outer surface of said cylindrical damper mass (54) and the interior surface of said cylindrical housing (48).

5. A method for damping resonant modes in a head positioning apparatus for a magnetic disk drive comprising at least one magnetic head accessing arm structure (18) including at least one head arm (22 to 27), which arm structure is rotatably mounted on a chosen axis (34), and drive means (36, 38, 40) connected to said arm structure, said method comprising inelastically coupling vibrational mode energy occurring in said apparatus to a movable mass (54) by providing a film of a viscous liquid (66) between said mass (54) and said arm structure so as to cause vibrational movement of said mass, thereby effecting energy dissipation in said inelastic coupling and causing a concurrent reduction in magnitude of said resonant modes, characterised in that the mass (54) is linearly moved directly by said accessing arm structure (18), thereby directly coupling said vibrational mode energy from the arm structure to the movable mass and producing a reduction in magnitude of vibrational modes of said arm structure.

## Patentansprüche

1. Kopfpositioniervorrichtung für ein Magnetplattengerät mit mindestens einer Magnetkopf-Zugriffsarmstruktur (18), die mindestens einen Kopfarm (22 bis 27) enthält und die um eine gewählte Achse (34) drehbar befestigt ist, Antriebsmitteln (36, 38, 40), die mit der Armstruktur (18) gekoppelt sind, und einem Gleitmassendämpfer (46), der mit der Armstruktur (18) verbunden ist und ein Gehäuse (48) mit Innenwänden, die einen Film aus einer zähflüssigen Flüssigkeit (66) aufnehmen und eine auf dem Film (66) liegende Masse (54) aufweist, wobei sich der Film (66) zwischen den Innenwänden und der Masse (54) befindet um eine Hin- und Herbewegung der Masse relativ zum des Gehäuse (48) auf dem Film zu ermöglichen, dadurch gekennzeichnet, daß die Masse (54) unabhängig von der Ausrichtung der Kopfpositioniervorrichtung bezüglich der Schwerkraft linear beweglich ist, und daß das Dämpfergehäuse (48) direkt auf der Armstruktur (18) in einem vorgegebenen Abstand von der gewählten Achse (34) an einem Ort befestigt ist, um von der Armstruktur (18) in der Richtung der hin- und hergehenden Bewegung der Masse (54) eine beträchtliche Vibrationsrezonanzamplitude zu empfangen.

2. Kopfpositioniervorrichtung nach Anspruch 1, dadurch gekennzeichnet, daß eine Vielzahl von Kopfarmen (22 bis 27) von einem Mittelteil der Armstruktur (18) ragt und eine Motorwicklung an dem Mittelteil entgegengesetzt zu den Kopfarmen (22 bis 27) befestigt ist, wobei der Gleitmassendämpfer (46) mit dem äußeren Ende der Motorwicklung (36) verbunden ist.

3. Kopfpositioniervorrichtung nach Anspruch 2, dadurch gekennzeichnet, daß die Motorwicklung (36) zwei im wesentlichen radial vom Mittelteil ragende Außenflansche (42, 44) aufweist und der Gleitmassendämpfer (46) zwischen den Außenflanschen (42, 44) befestigt ist.

4. Kopfpositioniervorrichtung nach einem der Ansprüche 1 bis 3, dadurch gekennzeichnet, daß der Gleitmassendämpfer (46) ein zylindrisches Gehäuse (48) mit Stirnwänden (50, 52), eine zylindrische Gleitdämpfermasse (54), die koaxial im Gehäuse (48) befestigt ist und eine Zentralbohrung (56) hat, daß sich zwischen den entgegengesetzten Stirnwänden (50, 52) des Gehäuses (48) und den jeweiligen Enden der Dämpfermasse (54) zwei weiche Zentrierfedern (58, 60) erstrecken, und der Film (66) sich zwischen der äußeren Oberfläche der zylindrischen Dämpfermasse (54) und der Innenfläche des zylindrischen Gehäuses (48) befindet.

5. Verfahren zur Resonanzdämpfung in einer Kopfpositioniervorrichtung für ein Magnetplattengerät mit mindestens einer Magnetkopf-Zugriffsarmstruktur (18), die mindestens einen Kopfarm (22 bis 27) aufweist, wobei die Armstruktur um eine gewählte Achse (34) drehbar befestigt ist und Antriebsmittel (36, 38, 40) mit der Armstruktur verbunden sind, wobei das Verfahren eine starre Kopplung von in der Kopfpositioniervorrichtung auftretender Vibrationsenergie zu einer beweglichen Masse durch das Vorsehen eines Films aus einer zähflüssigen Flüssigkeit (66) zwischen der Masse (54) und der Armstruktur aufweist um eine Vibrationsbewegung der Masse zu verursachen und dadurch einen Energieverbrauch in der starren Kopplung und eine gleichzeitige Verringerung der Resonanzamplitude zu bewirken, dadurch gekennzeichnet, daß die Masse (54) unmittelbar durch die Zugriffsarmstruktur (18) linear bewegt wird, wodurch die von der Armstruktur kommende Vibrationsenergie direkt zur beweglichen Masse gekoppelt und die Stärke der Vibrationsschwingung der Armstruktur reduziert wird.

**Revendications**

1. Dispositif de positiionnement de tête pour un module d'entraînement de disque magnétique, comprenant au moins une structure de bras d'accès de tête magnétique (18) comprenant au moins un bras porte-tête (22 à 27), laquelle structure de bras (18) est montée rotative sur un axe choisi (34), des moyens d'entraînement (36, 38, 40) couplés à ladite structure de bras (18) et un amortisseur à masse flottante (46) couplée à ladite structure de bras (18) et comprenant un boîtier (48) qui possède des parois intérieures recevant un film de liquide visqueux (66) et une masse (54) placée sur ledit film (66), ledit film (66) étant placé entre lesdites parois intérieures et ladite masse (54) pour permettre à ladite masse de se déplacer sur ledit film en mouvement alternatif par rapport audit boîtier (48), caractérisé en ce que ladite masse (54) se déplace linéairement indépendamment de l'orientation dudit dispositif positionneur de tête par rapport à la gravité et en ce que ledit boîtier (48) de l'amortisseur est monté directement sur ladite structure de bras (18) à une distance prédéterminée dudit axe choisi (34) et en un emplacement approprié pour recevoir une amplitude de résonance de vibration notable transmise par ladite structure de bras (18) dans la direction dudit mouvement alternatif de ladite masse (54).

2. Positionneur de tête selon la revendication 1, dans lequel une pluralité de bras porte-têtes (22 à 27) s'étend à partir d'une portion centrale de ladite structure de bras (18) et un enroulement de moteur (36) est monté sur ladite portion centrale, à l'opposé de ladite pluralité de bras porte-têtes (22 à 27), ledit amortisseur à masse flottante (46) étant relié à l'extrémité extérieure dudit enroulement de moteur (36).

3. Positionneur de tête selon la revendication 2, dans lequel l'enroulement de moteur (36) comprend deux joues terminales (42, 44) qui s'étendent sensiblement radialement à partir de ladite portion centrale, ledit amortisseur à masse flottante (46) étant monté entre lesdites joues terminales (42, 44).

4. Positionneur de tête selon une quelconque des revendications 1 à 3, dans lequel ledit amortisseur à masse flottante (46) comprend un boîtier cylindrique (48) possédant des parois terminales (50, 52), une masse amortisseuse flottante (54) montée coaxialement à l'intérieur dudit boîtier (48) et possédant un passage central (56), et deux ressorts de centrage de faible force (58, 60) qui s'étendent entre les parois terminales opposées (50, 52) dudit boîtier (48) et les extrémités respectives de ladite masse amortisseuse (54), ledit film (66) étant placé entre la surface extérieure de ladite masse amortisseuse cylindrique (54) et ladite surface intérieure dudit boîtier cylindrique (48).

5. Procédé pour amortir des modes de résonance dans un dispositif de positionnement de tête pour dispositif d'entraînement de disque magnétique, comprenant au moins une structure de bras d'accès de tête magnétique (18) comprenant au moins un bras porte-tête (22 à 27), laquelle structure de bras est montée rotative sur un axe choisi (34), et les moyens d'entraînement (36, 38, 40) reliés à ladite structure de bras, ledit procédé consistant à transmettre l'énergie de mode vibratoire qui se manifeste dans ledit appareil à une masse mobile (54) par une liaison inélastique en disposant un film de liquide visqueux (66) entre ladite masse (54) et ladite structure de bras de manière à déterminer un mouvement vibratoire de ladite masse, pour assurer de cette façon une dissipation d'énergie dans ladite liaison inélastique et assurer une réduction concomitante de la grandeur desdits modes de résonance, caractérisé en ce que la masse (54) est mise directement en mouvement linéaire par ladite structure de bras d'accès (18), de sorte qu'elle transmet directement ladite énergie de mode vibratoire de la structure de bras à la masse mobile et détermine une réduction de la grandeur des modes vibratoires de ladite structure de bras.

*Fig. 1a*

*Fig. 1b*

*Fig. 2*

*Fig. 3*